# EUROPEAN PATENT APPLICATION

(11) **EP 3 637 722 A1**
(43) Date of publication of application: **15.04.2020**
(21) Application number: 18829059.7
(22) Date of filing: 09.03.2018
(51) Int. Cl.: H04L 29/06

(54) **METHOD AND APPARATUS FOR PROCESSING MEDIA INFORMATION**

(30) Priority: 07.07.2017 CN 201710551238
(71) Applicant: Huawei Technologies Co., Ltd., Longgang District Shenzhen, Guangdong 518129 (CN)
(72) Inventor: DI, Peiyun, Shenzhen Guangdong 518129 (CN); XIE, Qingpeng, Shenzhen Guangdong 518129 (CN)
(74) Representative: Maiwald Patent- und Rechtsanwaltsgesellschaft mbH
(86) International application number: PCT/CN2018/078540
(87) International publication number: WO 2019/007096

(57) **Abstract**

Embodiments of the present invention disclose a media information processing method and apparatus. The method includes: obtaining metadata information of media data, where the metadata information includes source information of metadata, the source information is used to indicate a recommender of the media data, and the media data is omnidirectional media data; and processing the media data based on the source information of the metadata. According to the media information processing method and apparatus in the embodiments of the present invention, information about the recommender of the media data may be used as a reference for a client during data processing, thereby increasing choices for a user and improving user experience.

## Description

### TECHNICAL FIELD

The present invention relates to the field of streaming media transmission technologies, and in particular, to a media information processing method and apparatus.

### BACKGROUND

The ISO/IEC 23090-2 standard specification is also referred to as the OMAF (Omnidirectional media format, omnidirectional media format) standard specification. This specification defines a media application format that can implement presentation of omnidirectional media in application. The omnidirectional media mainly refers to an omnidirectional video (360° video) and associated audio. The OMAF specification first specifies a list of projection methods that can be used to convert a spherical video into a two-dimensional video, and then specifies how to use an ISO base media file format (ISO base media file format, ISOBMFF) to store the omnidirectional media and metadata associated with the media and how to encapsulate and transmit data of the omnidirectional media in a media streaming system, for example, dynamic adaptive streaming over hypertext transfer protocol (Dynamic Adaptive Streaming over HTTP (HyperText Transfer Protocol, HTTP), DASH) as specified in the ISO/IEC 23009-1 standard.

The ISO base media file format comprises a sequence of boxes (box), where the boxes may include other boxes, including a metadata box and a media data box. The metadata box (moov box) includes metadata, and the media data box (mdat box) includes media data. The metadata box and the media data box may be in a same file or separated files. If timed metadata is encapsulated by using the ISO base media file format, the metadata box includes metadata that describes the timed metadata, and the media data box includes the timed metadata.

In the prior art, because a client cannot accurately identify a source of data, when the client selects media data based on metadata, a user requirement cannot be fully met, and user experience is relatively poor.

### SUMMARY

Embodiments of the present invention provide a media information processing method and apparatus, so that a client can select different processing manners based on a source of metadata.

In an embodiment of a first aspect of the present invention, a media information processing method is disclosed, where the method includes:
obtaining metadata information of media data, where the metadata information includes source information of metadata, the source information is used to indicate a recommender of the media data, and the media data is omnidirectional media data; and
processing the media data based on the source information of the metadata.

The omnidirectional media data in this embodiment of the present invention may be video data or audio data. In a possible implementation, for a related example of omnidirectional media, refer to a related stipulation in the ISO/IEC 23090-2 standard specification.

In a possible implementation, the metadata is information about some attributes of the video data, such as duration, a bit rate, a frame rate, a location in a spherical coordinate system, and the like that are corresponding to the video data.

In a possible implementation, a region of an omnidirectional video is a region in video space corresponding to the omnidirectional video.

In a possible implementation, the source information of the metadata may indicate that video data corresponding to the metadata is recommended by an author of an omnidirectional video, or may indicate that video data corresponding to the metadata is recommended by a user of an omnidirectional video, or may indicate that video data corresponding to the metadata is recommended after statistics on results of viewing an omnidirectional video by a plurality of users are collected.

According to the media information processing method in this embodiment of the present invention, information about the recommender of the media data may be used as a reference for a client during data processing, thereby increasing choices for a user and improving user experience.

In a possible implementation of this embodiment of the present invention, the obtaining metadata information of media data includes:
obtaining a metadata track (track) of the media data, where the metadata track includes the source information of the metadata.

In a possible implementation, address information of the metadata track may be obtained by using a media presentation description file, and then an information obtaining request may be sent to this address, to receive and obtain the metadata track of the media data.

In a possible implementation, address information of the metadata track may be obtained by using a separate file, and then an information obtaining request may be sent to this address, to receive and obtain the metadata track of the media data.

In a possible implementation, a server sends the metadata track of the media data to a client.

In a possible implementation, a track (track) is a timed sequence of samples encapsulated according to an ISO base media file format (ISO base media file format, ISOBMFF). For example, a video track, a video sample is obtained by encapsulating, according to a specification of the ISOBMFF, a bitstream that is generated after a video encoder encodes each frame. For a specific definition of the track, refer to a related description in ISO/IEC 14496-12.

In a possible implementation, for a related attribute and data structure of the media presentation description file, refer to related descriptions in ISO/IEC 23009-1.

In a possible implementation, the source information of the metadata may be stored in a newly-added box (box) in the metadata track, and the source information of the metadata may be obtained by parsing data in the box.

In a possible implementation, the source information of the metadata may be an attribute added to an existing box in the metadata track, and the source information of the metadata may be obtained by parsing the attribute.

The source information of the metadata is encapsulated into the metadata track, so that the client can obtain the source information of the metadata when obtaining the metadata track, and the client can comprehensively consider another attribute of the metadata and the source information of the metadata to perform subsequent processing on associated media data.

In a possible implementation of this embodiment of the present invention, the obtaining metadata information of media data includes:
obtaining a media presentation description file of the media data, where the media presentation description file includes the source information of the metadata.

A client may obtain the media presentation description file by sending an HTTP request to a server, or a server may directly push the media presentation description file to a client. The client may alternatively obtain the media presentation description file in another possible manner. For example, the client may obtain the media presentation description file by interacting with another client side.

In a possible implementation, for a related attribute and data structure of the media presentation description file, refer to related descriptions in ISO/IEC 23009-1.

In a possible implementation, the source information of the metadata may be information indicated in a descriptor, or the source information of the metadata may be attribute information.

In a possible implementation, the source information of the metadata may be at an adaptation set (adaptation set) level or at a representation (representation) level in the media presentation description file.

In a possible implementation of this embodiment of the present invention, the obtaining metadata information of media data includes:
obtaining a bitstream that includes the media data, where the bitstream further includes supplemental enhancement information (supplementary enhancement information, SEI), and the supplemental enhancement information includes the source information of the metadata.

In a possible implementation, a client may send a media data obtaining request to a server, and then receive media data sent by the server. For example, the client may construct a uniform resource locator (Uniform Resource Locator, URL) by using a related attribute and address information in a media presentation description file, send an HTTP request to the URL, and then receive corresponding media data.

In a possible implementation, a client may receive a media data stream pushed by a server.

In a possible implementation of this embodiment of the present invention, the source information of the metadata is a source type identifier. Different source type identifiers or values of source type identifiers may indicate corresponding source types. For example, a flag with one bit may be used to indicate a source type, or a field with more bits may be used to identify a source type. In an example, the client side stores a file of a correspondence between the source type identifier and the source type, and therefore, the client may determine corresponding source types based on different values of source type identifiers or different source type identifiers.

In a possible implementation, one source type corresponds to one recommender. For example, the source type may be a recommendation of a video author, a recommendation of a user, or a recommendation made after statistics on viewing results of a plurality of users are collected.

In a possible implementation of this embodiment of the present invention, the source information of the metadata includes a semantic representation of the recommender of the media data. For example, codewords in ISO-639-2/T may be used to represent various types of semantics.

In a possible implementation of this embodiment of the present invention, the processing the media data corresponding to the metadata based on the source information of the metadata includes the following implementations:
if the client side has not obtained the media data corresponding to the metadata, the client side may request the corresponding media data from a server side or another terminal side based on source information chosen by the user;
if the client side has obtained the media data corresponding to the metadata, the client side may present or transmit the media data based on source information chosen by the user; or
if the method is performed on a server side, the server may push the media data to the client based on the source information of the metadata.

In a possible implementation, the server may determine to-be-pushed media data based on received source information of a plurality of pieces of metadata. For example, the server performs selection from a plurality of recommendations according to a standard, and then pushes media data based on a selection result. Alternatively, the server performs calculation on a plurality of recommendations according to a standard, and then pushes media data based on a calculation result.

In an embodiment of a second aspect of the present invention, a media information processing apparatus is provided, where the apparatus includes:
an information obtaining module, configured to obtain metadata information of media data, where the metadata information includes source information of metadata, the source information is used to indicate a recommender of the media data, and the media data is omnidirectional media data; and a processing module, configured to process the media data based on the source information of the metadata.

According to the media information processing apparatus in this embodiment of the present invention, information about the recommender of the media data may be used as a reference for a client during data processing, thereby increasing choices for a user and improving user experience.

In a possible implementation, the information obtaining module is specifically configured to obtain a metadata track (track) of the media data, and the metadata track includes the source information of the metadata.

In a possible implementation, the information obtaining module is specifically configured to obtain a media presentation description file of the media data, where the media presentation description file includes the source information of the metadata.

In a possible implementation, the information obtaining module is specifically configured to obtain a bitstream that includes the media data, where the bitstream further includes supplemental enhancement information (supplementary enhancement information, SEI), and the supplemental enhancement information includes the source information of the metadata.

In a possible implementation, the source information of the metadata is a source type identifier.

In a possible implementation, the source information of the metadata includes a semantic representation of the recommender of the media data.

For a specific example and an implementation of the apparatus embodiment of the present invention, refer to related examples in the foregoing method embodiment of the first aspect. Details are not described herein.

In an embodiment of a third aspect of the present invention, a media information processing method is disclosed, where the method includes:
receiving pieces of user viewport information sent by a plurality of clients, where the user viewport information is used to indicate a viewport for a user to view omnidirectional media data; determining a target viewport based on all the pieces of user viewport information; and sending media data corresponding to the target viewport.

According to the media information processing method in this embodiment of the present invention, statistical analysis may be performed on viewports for a plurality of users to view a same video, so as to provide an effective manner of recommending a viewport when a subsequent user views the video, thereby improving user experience.

In a possible implementation, the method is performed on a server side, for example, by a content preparation server, a content delivery network (Content distribution network, CDN), or a proxy server.

In a possible implementation, the user viewport information sent by the client may be sent by using a separate file, or may be included in another data file sent by the client.

In a possible implementation, for descriptions and examples of omnidirectional media and the viewport, refer to the examples in the foregoing embodiment of the first aspect and the specific implementations. Details are not described herein.

In a possible implementation, the determining a target viewport based on all the pieces of user viewport information may be: selecting the target viewport from a plurality of viewports according to a preset standard and a statistical principle, or performing calculation on data of a plurality of viewports in a manner, to obtain the target viewport.

In a possible implementation, the media data corresponding to the target viewport may be directly pushed to the client; or the media data corresponding to the target viewport may be pushed to a delivery server; or when an obtaining request of the client for the omnidirectional media data is received, the media data corresponding to the target viewport may be fed back to the client.

In an embodiment of a fourth aspect of the present invention, a media information processing method is disclosed, where the method includes:
receiving pieces of user viewport information sent by a plurality of clients, where the user viewport information is used to indicate a viewport for a user to view omnidirectional media data; determining a target viewport based on all the pieces of user viewport information; and generating metadata information of media data based on the target viewport.

According to the media information processing method in this embodiment of the present invention, statistical analysis may be performed on viewports for a plurality of users to view a same video, so as to provide an effective manner of recommending a viewport when a subsequent user views the video, thereby improving user experience.

In a possible implementation, the method is performed on a server side, for example, by a content preparation server, a content delivery network (Content distribution network, CDN), or a proxy server.

In a possible implementation, the user viewport information sent by the client may be sent by using a separate file, or may be included in another data file sent by the client.

In a possible implementation, for descriptions and examples of omnidirectional media and the viewport, refer to examples in the embodiment of the first aspect and the specific implementations. Details are not described herein.

In a possible implementation, the determining a target viewport based on all the pieces of user viewport information may be: selecting the target viewport from a plurality of viewports according to a preset standard and a statistical principle, or performing calculation on data of a plurality of viewports in a manner, to obtain the target viewport.

In an embodiment of a fifth aspect of the present invention, a media information processing apparatus is disclosed, where the apparatus includes:
a receiver, configured to receive pieces of user viewport information sent by a plurality of clients, where the user viewport information is used to indicate a viewport for a user to view omnidirectional media data; a processor, configured to determine a target viewport based on all the pieces of user viewport information; and a transmitter, configured to send media data corresponding to the target viewport.

In an embodiment of a sixth aspect of the present invention, a media information processing apparatus is disclosed, where the apparatus includes:
a receiver, configured to receive pieces of user viewport information sent by a plurality of clients, where the user viewport information is used to indicate a viewport for a user to view omnidirectional media data; and a processor, configured to determine a target viewport based on all the pieces of user viewport information and generate metadata information of media data based on the target viewport.

For specific examples and implementations of the apparatus embodiments of the fifth aspect and the sixth aspect of the present invention, refer to related examples in the foregoing method embodiments of the third aspect and the fourth aspect. Details are not described herein.

In an embodiment of a seventh aspect of the present invention, a media information processing apparatus is disclosed, where the apparatus includes one or more processors and a memory. The memory is coupled to the one or more processors. The memory is configured to store computer program code, and the computer program code includes an instruction. When the one or more processors execute the instruction, the processing apparatus performs the media information processing method according to the first aspect, the third aspect, the fourth aspect, or any possible implementation of the foregoing aspects.

In an embodiment of an eighth aspect of the present invention, a computer readable storage medium is disclosed. The computer readable storage medium stores an instruction, and when the instruction is run on a device, the device is enabled to perform the media information processing method according to the first aspect, the third aspect, the fourth aspect, or any possible implementation of the foregoing aspects.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 shows an example of a change of a viewport for an omnidirectional video according to an embodiment of the present invention;
FIG. 2 shows an example of dividing space that is corresponding to an omnidirectional video into spatial objects according to an embodiment of the present invention;
FIG. 3 is a schematic diagram of a relative location of a spatial object in space corresponding to an omnidirectional video according to an embodiment of the present invention;
FIG. 4 shows an example of a coordinate system for describing a spatial object according to an embodiment of the present invention;
FIG. 5 shows another example of a coordinate system for describing a spatial object according to an embodiment of the present invention;
FIG. 6 shows still another example of a coordinate system for describing a spatial object according to an embodiment of the present invention;
FIG. 7 shows an example of an application scenario of a method and an apparatus according to an embodiment of the present invention;
FIG. 8 is a schematic flowchart of a media information processing method according to an embodiment of the present invention;
FIG. 9 is a schematic structural diagram of a media information processing apparatus according to an embodiment of the present invention;
FIG. 10 is a schematic diagram of specific hardware of a media information processing apparatus according to an embodiment of the present invention; and
FIG. 11(a) and FIG. 11(b) are a schematic diagram of a mapping relationship between a spatial object and video data according to an embodiment of the present invention.

### DESCRIPTION OF EMBODIMENTS

The following clearly and completely describes the technical solutions in the embodiments of the present invention with reference to the accompanying drawings in the embodiments of the present invention.

In some embodiments of the present invention, a track (track) is a timed sequence of samples encapsulated according to an ISO base media file format (ISO base media file format, ISOBMFF). For example, a video track, a video sample is obtained by encapsulating, according to a specification of the ISOBMFF, a bitstream that is generated after a video encoder encodes each frame.

The track is defined in the ISO/IEC 14496-12 standard as "timed sequence of related samples (q.v.) in an ISO base media file. NOTE: For media data, a track corresponds to a sequence of images or sampled audio; for hint tracks, a track corresponds to a streaming channel. "

A Chinese translation is "timed sequence of related samples (q.v.) in an ISO base media file. NOTE: For media data, a track corresponds to a sequence of images or sampled audio; for hint tracks, a track corresponds to a streaming channel."

An ISOBMFF file comprises a plurality of boxes (box), where one box may include another box.

The box is defined in the ISO/IEC 14496-12 standard as "object-oriented building block defined by a unique type identifier and length. NOTE: Called 'atom' in some specifications, including the first definition of MP4."

A Chinese translation is "object-oriented building block defined by a unique type identifier and length. NOTE: Called 'atom' in some specifications, including the first definition of MP4."

Supplemental enhancement information (supplementary enhancement information, SEI) is a type of a network access unit (Network Abstract Layer Unit, NALU) defined in the video coding and decoding standards h.264 and h.265 released by the International Telecommunication Union (International Telecommunication Union, ITU).

A media presentation description (Media presentation description, MPD) is a file specified in the ISO/IEC 23009-1 standard, where the file includes metadata for a client to construct an HTTP-URL. The MPD includes one or more period (period) elements; each period element includes one or more adaptation sets (adaptationset); each adaptation set includes one or more representations (representation); and each representation includes one or more segments. The client selects a representation based on information in the MPD, and constructs an HTTP-URL of a segment.

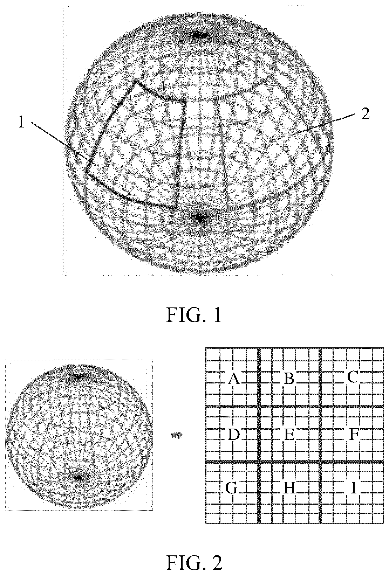

Currently, with increasing popularity of applications for viewing a VR video such as a 360-degree video, increasingly more users participate in experience of viewing a wide-angle VR video. Such new video viewing applications not only bring a new video viewing mode and new visual experience to the users, but also bring a new technical challenge. In a process of viewing the wide-angle video such as the 360-degree video (the 360-degree video is used as an example for description in the embodiments of the present invention), a spatial region (the spatial region may also be referred to as a spatial object) of the VR video is 360-degree panoramic space (or referred to as omnidirectional space or a panoramic spatial object) that exceeds a normal visual range of human eyes. Therefore, when viewing the video, a user changes a viewport (field of view, FOV) at any time. When using different viewports, the user sees different video pictures. In this case, content presented in the video needs to be changed with the viewport of the user. FIG. 1 is a schematic viewport diagram corresponding to a viewport change. A block 1 and a block 2 represent two different viewports of a user. When viewing a video, the user may switch a viewport for the user to view the video from the block 1 to the block 2 through an operation such as eye movement, head movement, or switching of an image on a video viewing device. A video picture viewed by the user when the viewport is the block 1 is a video picture presented at this moment in one or more spatial objects corresponding to the viewport. The viewport of the user is switched to the block 2 at a next moment. In this case, the video picture viewed by the user should be switched to a video picture presented at the moment in a spatial object corresponding to the block 2.

In some feasible implementations, for output of a wide-angle 360-degree video picture, a server may divide panoramic space (or referred to as a panoramic spatial object) in a viewport range corresponding to an omnidirectional video into a plurality of spatial objects. Each spatial object may correspond to one sub-viewport of the user. A plurality of sub-viewports are spliced into a complete human-eye observation viewport. Each spatial object corresponds to one sub-region of the panoramic space. That is, a human-eye viewport (hereinafter referred to as a viewport) may correspond to one or more spatial objects obtained after division. The spatial objects corresponding to the viewport are all spatial objects corresponding to content objects in a human-eye viewport range. The human-eye observation viewport may be dynamically changed. However, the viewport range may usually be 120 degrees x 120 degrees. A spatial object corresponding to a content object in the human-eye viewport range of 120 degrees x 120 degrees may include one or more spatial objects obtained through division, for example, a viewport 1 corresponding to the block 1 and a viewport 2 corresponding to the block 2 in FIG. 1. Further, a client may obtain, by using an MPD, spatial information of a video bitstream prepared by the server for each spatial object, and then the client may request, from the server based on a viewport requirement, a video bitstream segment/video bitstream segments corresponding to one or more spatial objects in a time period, and output the corresponding spatial objects based on the viewport requirement. The client outputs, in a same time period, video bitstream segments corresponding to all spatial objects in a 360-degree viewport range, to output and display a complete video picture in the time period in entire 360-degree panoramic space.

In specific implementation, 360-degree spatial objects through division may include, the server may first map a sphere to a plane, and divide the plane into the spatial objects. Specifically, the server may map the sphere to a longitude and latitude plan view in a longitude and latitude mapping manner. FIG. 2 is a schematic diagram of a spatial object according to an embodiment of the present invention. A server may map a sphere to a longitude and latitude plan view, and divide the longitude and latitude plan view into a plurality of spatial objects A to I. Further, the server may alternatively map the sphere to a cube, and then unfold a plurality of surfaces of the cube to obtain a plan view; or the server may map the sphere to another polyhedron, and then unfold a plurality of surfaces of the polyhedron to obtain a plan view. The server may alternatively map the sphere to a plane in more mapping manners. This may be specifically determined based on an actual application scenario requirement, and is not limited herein. The following provides a description based on the longitude and latitude mapping manner with reference to FIG. 2. As shown in FIG. 2, after dividing panoramic space of the sphere into the plurality of spatial objects A to I, the server may prepare one group of video bitstreams for each spatial object. Each spatial object corresponds to one group of video bitstreams. When a client user switches a viewport for viewing a video, the client may obtain, based on a new viewport chosen by the user, a bitstream corresponding to a new spatial object, and further present, in the new viewport, video content of the bitstream corresponding to the new spatial object.

When producing a video, a video producer (hereinafter referred to as an author) may design, based on a requirement of a plot of the video, a main plot line for video playing. In a video playing process, a user only needs to view a video picture corresponding to the main plot line to learn about the plot, and another video picture is optional. It may be learned that, in the video playing process, a client may select a video picture corresponding to the plot for playing, and may not present another video picture, so as to save transmission resources and storage space resources for video data, and increase video data processing efficiency. After designing the main plot, the author may specify, based on the main plot line, a video picture to be presented to the user at each playing moment during the video playing. The plot of the main plot line may be obtained by splicing video pictures at all playing moments together in a time sequence. The video picture to be presented to the user at each playing moment is a video picture to be presented in a spatial object corresponding to each playing moment, namely, a video picture to be presented in the spatial object in this time period. In specific implementation, a viewport corresponding to the video picture to be presented at each playing moment may be set as an author viewport, a spatial object in which a video picture in the author viewport is presented may be set as an author spatial object, and a bitstream corresponding to an author viewport object may be set as an author viewport bitstream. The author viewport bitstream includes video frame data of a plurality of video frames (encoded data of the plurality of video frames). Each video frame may be presented as one picture. That is, the author viewport bitstream corresponds to a plurality of pictures. In the video playing process, at each playing moment, a picture presented in the author viewport is only a part of a panoramic picture (or referred to as a VR picture or an omnidirectional picture) to be presented in an entire video. At different playing moments, spatial information of spatial objects associated with pictures corresponding to author viewports may be different or the same.

After the author designs the author viewport at each playing moment, region information corresponding to the viewport may be encapsulated into a metadata track. After receiving the metadata track, the client may request a video bitstream corresponding to a region carried in the metadata track from a server, and decode the video bitstream. Then, a plot image corresponding to the author viewport may be presented to the user. The server does not need to transmit a bitstream corresponding to a viewport (which is set as a non-author viewport, namely, a static viewport bitstream) other than the author viewport to the client, thereby saving resources such as transmission bandwidth for video data.

The author viewport is a picture that is set, by the author based on the plot of the video, to be presented in a preset spatial object, and author spatial objects may be different or the same at different playing moments. Therefore, it can be learned that, the author viewport is a viewport that is constantly changed with a playing moment, and the author spatial object is a dynamic spatial object whose location is constantly changed. That is, locations of author spatial objects corresponding to all playing moments in the panoramic space are not completely the same. The spatial objects shown in FIG. 2 are spatial objects that are obtained through division according to a preset rule and whose relative locations in the panoramic space are fixed. An author spatial object corresponding to any playing moment is not necessarily one of the fixed spatial objects shown in FIG. 2, and is a spatial object whose relative location in global space is constantly changed.

In a possible implementation of the spatial information, the spatial information may include location information of a center point of the spatial object or location information of an upper-left point of the spatial object, and the spatial information may further include a width and a height of the spatial object.

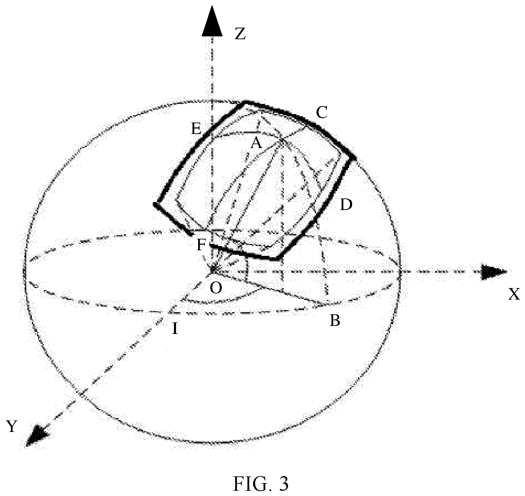

When a coordinate system corresponding to the spatial information is an angular coordinate system, the spatial information may be described by using a yaw angle; or when a coordinate system corresponding to the spatial information is a pixel coordinate system, the spatial information may be described by using a spatial location in a longitude and latitude graph or by using another solid geometric figure. This is not limited herein. If the spatial information is described by using a yaw angle, a pitch (pitch) angle θ, a yaw (yaw) angle ψ, a roll (roll) angle Φ, and the like are used to represent a width and a height of an angle range. FIG. 3 is a schematic diagram of a relative location of a center point of a spatial object in panoramic space. In FIG. 3, a point O is a sphere center corresponding to a 360-degree VR panoramic video spherical picture, and may be considered as a location of human eyes for viewing the VR panoramic picture. A point A is a center point of a target spatial object. C and F are boundary points on an arc that are along a horizontal axis of the target spatial object, that pass through the point A, and that are in the target spatial object. E and D are boundary points that are along a vertical axis of the target spatial object, that pass through the point A, and that are in the target spatial object. B is a point to which the point A along a spherical meridian is projected on an equator, and I is a start coordinate point on the equator in a horizontal direction. Elements are described as follows:

The pitch angle is a deflection angle, for example, ∠AOB in FIG. 3, that is in a vertical direction and that is of a point to which a center location of a picture in the target spatial object is mapped in a panoramic spherical (namely, global space) picture.

The yaw angle is a deflection angle, for example, ∠IOB in FIG. 3, that is in a horizontal direction and that is of the point to which the center location of the picture in the target spatial object is mapped in the panoramic spherical picture.

The roll angle is a rotation angle, for example, ∠DOB in FIG. 3, in a direction of a line between the sphere center and a point to which a central location of a picture in a spatial object at the yaw angle is mapped in the panoramic spherical picture.

The pitch angle is used to indicate a height of an angle range (a height of the target spatial object in the angular coordinate system), namely, a height of a viewport of the picture that is in the spatial object and that is in the panoramic spherical picture. The pitch angle is represented by a maximum angle of the viewport in a vertical direction, for example, ∠DOE in FIG. 3. The yaw angle is used to indicate a width of the angle range (a width of the target spatial object in the angular coordinate system), namely, a width of the viewport of the picture that is in the target spatial object and that is in the panoramic spherical picture. The yaw angle is represented by a maximum angle of the viewport in a horizontal direction, for example, ∠COF in FIG. 3.

In another possible implementation of the spatial information, the spatial information may include location information of an upper-left point of the spatial object and location information of a lower-right point of the spatial object.

In still another possible implementation of the spatial information, when the spatial object is not a rectangle, the spatial information may include at least one of a shape type of the spatial object, a radius of the spatial object, and a perimeter of the spatial object.

In some embodiments, the spatial information may include space rotation information of the spatial object.

In some embodiments, the spatial information may be encapsulated in spatial information data or a spatial information track (track). The spatial information data may be a bitstream of video data, metadata of video data, or a file independent of video data. The spatial information track may be a track independent of video data.

In some embodiments, the spatial information may be encapsulated in spatial information metadata (track matedata) of a video. For example, the spatial information is encapsulated in a same box such as a covi box.

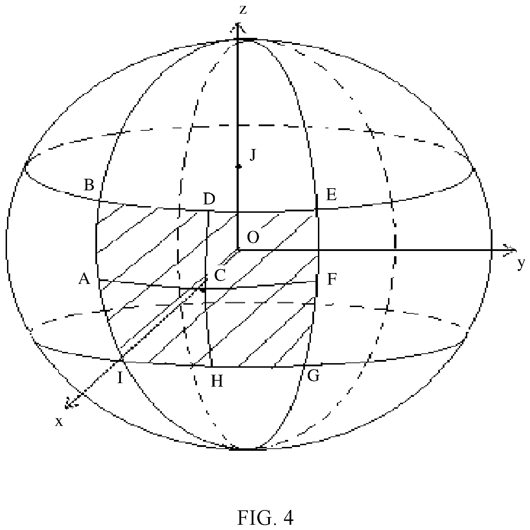

In some embodiments, a coordinate system used to describe a width and a height of a target spatial object is shown in FIG. 4. A hatched part on a sphere represents the target spatial object, and vertexes of four angles of the target spatial object are B, E, G, and I. In FIG. 4, O is a sphere center corresponding to a 360-degree VR panoramic video spherical picture, and the vertexes B, E, G, and I are points, on the sphere, of intersection between circles passing through the sphere center (the circles each use the sphere center O as a circle center, radiuses of the circles each are a radius of a sphere corresponding to the 360-degree VR panoramic video spherical picture, the circles pass through a z axis, and there are two circles, where one circle passes through points B, A, I, and O, and the other circle passes through points E, F, G, and O) and circles parallel to an x axis and a y axis (the circles each do not use the sphere center O as a circle center, and there are two circles, where the two circles are parallel to each other, one circle passes through points B, D, and E, and the other circle passes through points I, H, and G). C is a center point of the target spatial object. An angle corresponding to a side DH is represented as the height of the target spatial object, and an angle corresponding to a side AF is represented as the width of the target spatial object. The side DH and the side AF pass through the point C. Angles corresponding to a side BI, a side EG, and the side DH are the same, and angles corresponding to a side BE, a side IG, and the side AF are the same. A vertex of the angle corresponding to the side BE is J, where J is a point of intersection between the z axis and the circle that passes through B, D, and E. Correspondingly, a vertex of the angle corresponding to the side IG is a point of intersection between the z axis and the circle that passes through I, H, and G. A vertex of the angle corresponding to the side AF is the point O, and vertexes of the angles corresponding to the side BI, the side EG, and the side DH each are also the point O.

It should be noted that, the foregoing description is only an example. Alternatively, the target spatial object may be obtained after two large circles that pass through the sphere center intersect with two parallel circles. Alternatively, the target spatial object may be obtained after two yaw angle circles intersect with two pitch angle circles. For the yaw angle circles, points on the circles have a same yaw angle, and for the pitch angle circles, points on the circles have a same pitch angle. Alternatively, the target spatial object may be obtained after two circles of longitude intersect with two circles of latitude.

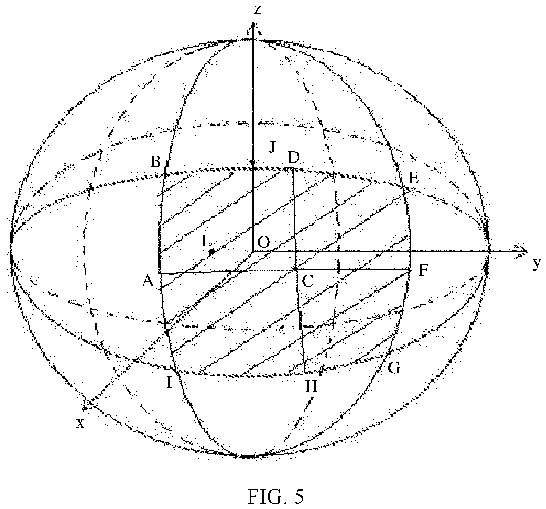

In some embodiments, a coordinate system used to describe a width and a height of a target spatial object is shown in FIG. 5. A hatched part on a sphere represents the target spatial object, and vertexes of four angles of the target spatial object are B, E, G, and I. In FIG. 5, O is a sphere center corresponding to a 360-degree VR panoramic video spherical picture, and the vertexes B, E, G, and I are points, on the sphere, of intersection between circles passing through a z axis (the circles each use the sphere center O as a circle center, radiuses of the circles each are a radius of a sphere corresponding to the 360-degree VR panoramic video spherical picture, and there are two circles, where one circle passes through points B, A, and I, and the other circle passes through points E, F, and G) and circles passing through a y axis (the circles each use the sphere center O as a circle center, radiuses of the circles each are the radius of the sphere corresponding to the 360-degree VR panoramic video spherical picture, and there are two circles, where one circle passes through points B, D, and E, and the other circle passes through points I, H, and G). C is a center point of the target spatial object. An angle corresponding to a side DH is represented as the height of the target spatial object, and an angle corresponding to a side AF is represented as the width of the target spatial object. The side DH and the side AF pass through the point C. Angles corresponding to a side BI, a side EG, and the side DH are the same, and angles corresponding to a side BE, a side IG, and the side AF are the same. A vertex of the angle corresponding to the side BE is J, where J is a point of intersection between the z axis and a circle that passes through the two points B and E and that is parallel to an x axis and the y axis. A vertex of the angle corresponding to the side IG is a point of intersection between the z axis and a circle that passes through the two points I and G and that is parallel to the x axis and the y axis. A vertex of the angle corresponding to the side AF is the point O, and a vertex of the angle corresponding to the side BI is a point L, where the point L is a point of intersection between the y axis and a circle that passes through the two points B and I and that is parallel to the z axis and the x axis. A vertex of the angle corresponding to the side EG is a point of intersection between the y axis and a circle that passes through the two points E and G and that is parallel to the z axis and the x axis. A vertex of the angle corresponding to the side DH is also the point O.

It should be noted that, the foregoing description is only an example. Alternatively, the target spatial object may be obtained after two circles that pass through the x axis intersect with two circles that pass through the z axis. Alternatively, the target spatial object may be obtained after two circles that pass through the x axis intersect with two circles that pass through the y axis. Alternatively, the target spatial object may be obtained after four circles that pass through the sphere center intersect.

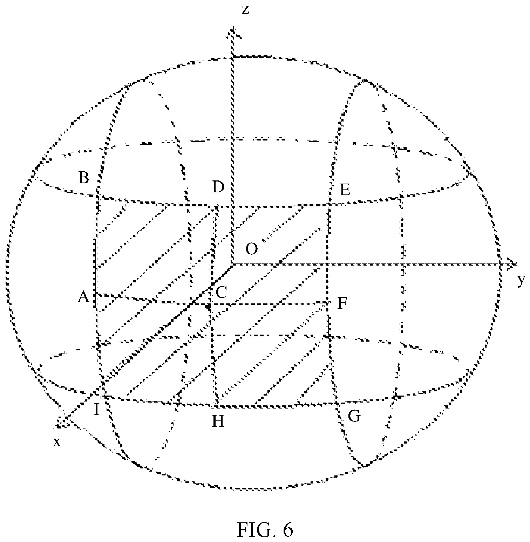

In some embodiments, a coordinate system used to describe a width and a height of a target spatial object is shown in FIG. 6. A hatched part on a sphere represents the target spatial object, and vertexes of four angles of the target spatial object are B, E, G, and I. In FIG. 6, O is a sphere center corresponding to a 360-degree VR panoramic video spherical picture, and the vertexes B, E, G, and I are points, on the sphere, of intersection between circles parallel to an x axis and a z axis (the circles each do not use the sphere center O as a circle center, and there are two circles, where the two circles are parallel to each other, there are two circles, one circle passes through points B, A, and I, and the other circle passes through points E, F, and G) and circles parallel to the x axis and a y axis (the circles each do not use the sphere center O as a circle center, and there are two circles, where the two circles are parallel to each other, one circle passes through points B, D, and E, and the other circle passes through points I, H, and G). C is a center point of the target spatial object. An angle corresponding to a side DH is represented as the height of the target spatial object, and an angle corresponding to a side AF is represented as the width of the target spatial object. The side DH and the side AF pass through the point C. Angles corresponding to a side BI, a side EG, and the side DH are the same, and angles corresponding to a side BE, a side IG, and the side AF are the same. Vertexes of the angles corresponding to the side BE, the side IG, and the side AF each are the point O, and vertexes of the angles corresponding to the side BI, the side EG, and the side DH each are also the point O.

It should be noted that, the foregoing description is only an example. Alternatively, the target spatial object may be obtained after two circles that are parallel to the y axis and the z axis and that do not pass through the sphere center intersect with two circles that are parallel to the y axis and the x axis and that do not pass through the sphere center. Alternatively, the target spatial object may be obtained after two circles that are parallel to the y axis and the z axis and that do not pass through the sphere center intersect with two circles that are parallel to the z axis and the x axis and that do not pass through the sphere center.

A manner of obtaining the point J and the point L in FIG. 5 is the same as a manner of obtaining the point J in FIG. 4. The vertex of the angle corresponding to the side BE is the point J, and the vertex of the angle corresponding to the side BI is the point L. In FIG. 6, the vertexes corresponding to the side BE and the side BI each are the point O.

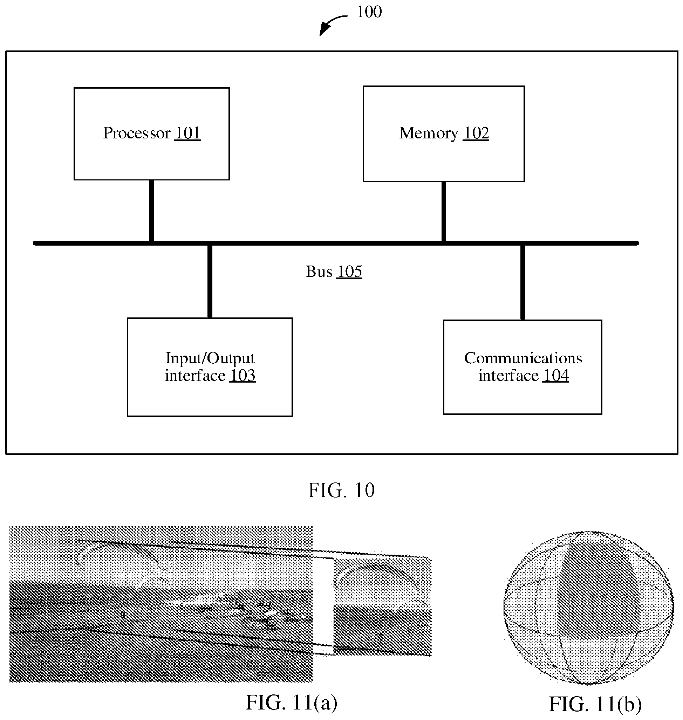

FIG. 11(a) and FIG. 11(b) are a schematic diagram of a mapping relationship between a spatial object and video data according to an embodiment of the present invention. FIG. 11 (a) shows an omnidirectional video (a larger picture on the left) and a sub-region of the omnidirectional video (a smaller picture on the right). FIG. 11 (b) shows video space (a sphere) corresponding to the omnidirectional video and a spatial object (a shaded part on the sphere) corresponding to the sub-region of the omnidirectional video.

A timed metadata track (timed metadata track) of a region (region) on a sphere is specified in an existing OMAF standard. In the metadata track, a metadata box includes metadata that describes the region on the sphere, and a media data box includes information about the region on the sphere. The metadata box describes an intention of the timed metadata track, namely, usage of the region on the sphere. The standard describes two types of timed metadata tracks: a recommended viewport timed metadata track (The recommended viewport timed metadata track) and an initial viewpoint track (the initial viewpoint timed metadata track). The recommended viewport track describes a region of a viewport recommended to a terminal for presentation, and the initial viewpoint track describes an initial presentation direction for viewing an omnidirectional video.

The following describes an application scenario of an embodiment of the present invention.

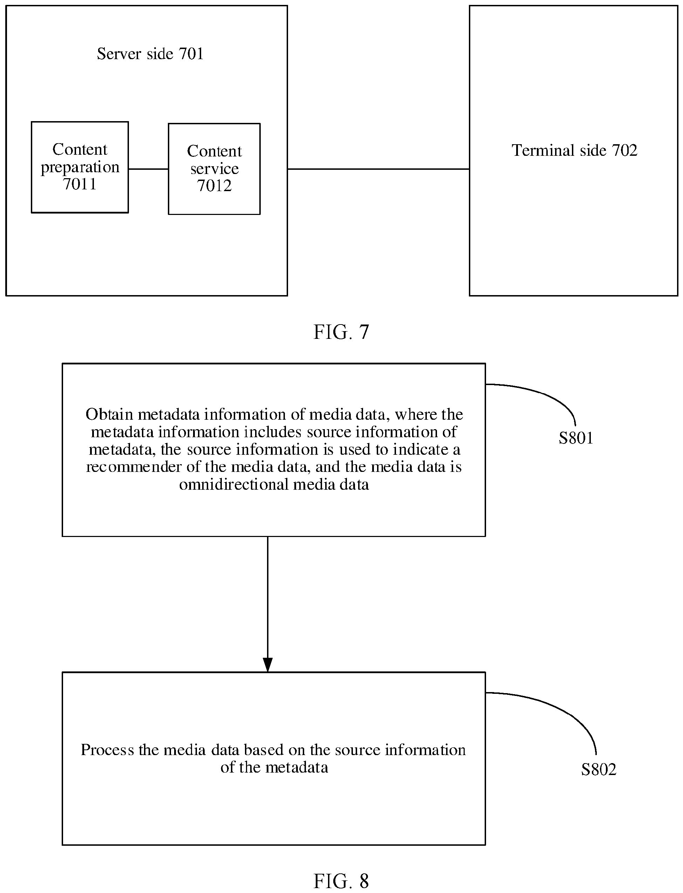

As shown in FIG. 7, a server side 701 includes content preparation 7011 and a content service 7012.

The content preparation 7011 may be a media data capture device or a media data transcoder, and is responsible for generating information, such as media content and associated metadata, of streaming media. For example, the content preparation 7011 is responsible for compressing, encapsulating, and storing/sending a media file (a video, an audio, or the like). The content preparation 7011 may generate metadata information and a file in which a source of metadata is located. The metadata may be encapsulated into a metadata track, or the metadata may be encapsulated in SEI of a video data track. A sample (sample) in the metadata track refers to some regions that are specified by a content generator and that are of an omnidirectional video or some regions that are specified by a content producer and that are of an omnidirectional video. The source of the metadata is encapsulated in the metadata track or carried in an MPD. If the metadata is encapsulated in the SEI, source information of the metadata may be carried in the SEI. In an implementation, the source information of the metadata may indicate that the metadata indicates a viewing region recommended by the content producer or a director.

The content service 7012 may be a network node, for example, a content delivery network (Content distribution network, CDN) or a proxy server. The content service 7012 may obtain stored or to-be-sent data from the content preparation 7011, and forward the data to a terminal side 702. Alternatively, the content service 7012 may obtain region information fed back by a terminal from a terminal side 702, generate a region metadata track or region SEI information based on the fed-back information, and generate a file carrying a source of the region information. The generating a region metadata track or region SEI information may be: collecting statistics on fed-back viewing information of regions of the omnidirectional video; selecting one or more most-viewed regions based on the collected statistics to generate a sample of a region that users are interested in; encapsulating the sample in a metadata track or SEI; and encapsulating source information of region metadata in the track, or adding source information of region metadata to an MPD, or adding source information of region metadata to the SEI. This source of the information indicates that region metadata information comes from statistics of a server, and indicates that a region described in the metadata track is a region that most users are interested in. Region information in the region metadata track or region information in the region SEI may alternatively be region information fed back by a user specified by the server. The region metadata track or the region SEI is generated based on the fed-back information, and the source information of the region metadata is carried in the region metadata track or the MPD or the SEI. The source of the region information describes a user that the region metadata comes from.

It may be understood that, the content preparation 7011 and the content service 7012 may be located on a same hardware device of a server, or may be located on different hardware devices. Both the content preparation 7011 and the content service 7012 may include one or more hardware devices.

The terminal side 702 obtains and presents media data, and the terminal side 702 obtains region information of content presented to a user in the omnidirectional video. The terminal side 702 feeds back the region information to a content service side 701. Alternatively, the terminal side 702 obtains media data, metadata, and data that carries source information of the metadata. The terminal side 702 parses the source information of the metadata, and parses corresponding metadata based on a source that is of metadata and that is chosen by a terminal user, to obtain region information for media presentation.

In a possible implementation, a manner in which a module processes source information of a metadata track is as follows.

The module obtains source information of metadata. The source information may indicate that a region associated with the metadata is recommended by a content producer or a director or a specified user, or may indicate that a region associated with the metadata may be a region that users are interested in and that is obtained based on related statistics. Alternatively, the source information may indicate a viewport recommended by a content producer or a director to a user for viewing an omnidirectional video, or a region that users are most interested in and that is recommended by a server, or a viewport recommended by a user.

The module obtains region information. The region information herein refers to some metadata of the region. The region information may indicate a region recommended or specified by the content producer or the director, or a region that the users are most interested in and that is obtained by collecting statistics on user feedback information, or a region for a terminal user to view the omnidirectional video. The region may be a region on a two-dimensional plane, or a region on a sphere. Two-dimensional plane region information is represented by a coordinate position of an upper-left pixel of the region on the two-dimensional plane and a width and a height of the region. If the region is on the sphere, the region information is represented by a location of a center point of the region on the sphere and a yaw and a pitch angle of the region on the sphere. Reference may be made to the foregoing related examples of indicating the region on the sphere, for example, the manners shown in FIG. 1 to FIG. 6. In an implementation, the region may alternatively be a direction on a sphere or a point on a sphere. In this case, the region is represented without information about a width and a height.

The module encapsulates associated metadata and a source of the metadata in a metadata track to generate a metadata track file; or encapsulates metadata in a metadata track to generate a metadata track file, and adds a source of the metadata to an MPD to generate an MPD file; or encapsulates metadata and a source of the metadata in SEI to generate a bitstream file. The file generated by the module may be locally stored or sent to a receive end, and the receive end may be on the terminal side or on the content service side.

The module for processing the source information of the metadata track may be a single submodule in the content preparation 7011, the content service 7012, or the terminal side 702 in FIG. 7, or related functions may be integrated into the foregoing devices.

The technical solutions of the embodiments of the present invention are mainly implemented on a content preparation side (a transcoder), an intelligent network node (CND or a proxy server), and on a terminal player side.

When generating region metadata, a transcoding server, a network server, and a terminal encapsulate the metadata into an independent track or in SEI, and encapsulate a source of the metadata in the metadata track or the SEI or an MPD file.

As shown in FIG. 8, in an embodiment of an aspect of the present invention, a media information processing method S80 is disclosed. The method S80 includes the following steps:

S801: Obtain metadata information of media data, where the metadata information includes source information of metadata, the source information is used to indicate a recommender of the media data, and the media data is omnidirectional media data.

S802: Process the media data based on the source information of the metadata.

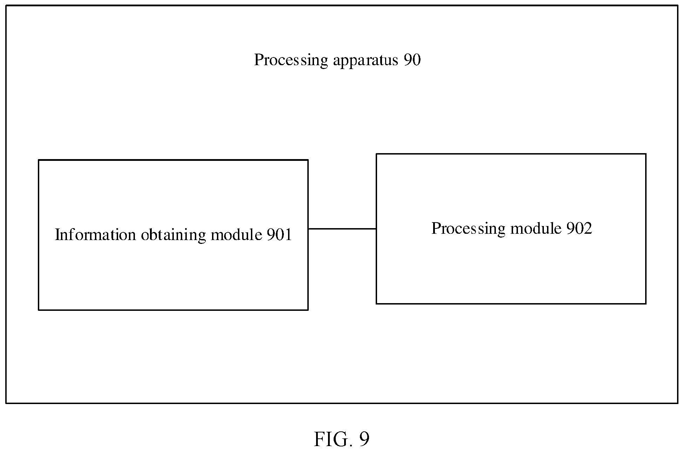

As shown in FIG. 9, in an embodiment of an aspect of the present invention, a media information processing apparatus 90 is disclosed. The apparatus 90 includes an information obtaining module 901 and a processing module 902. The information obtaining module 901 is configured to obtain metadata information of media data. The metadata information includes source information of metadata, the source information is used to indicate a recommender of the media data, and the media data is omnidirectional media data. The processing module 902 is configured to process the media data based on the source information of the metadata.

In a possible implementation of this embodiment of the present invention, the source information of the metadata is carried in a metadata track.

In the metadata track, one box is newly added for describing a source of sample data in the metadata track, and a source of the track is described in the box. In this embodiment, a format of the newly-added box is as follows:

```
          SourceInformationBox extends Box('sinf) {
          Unsigned int(8) source_type;//indicating a source of metadata: presetting by a
 director/pre-collected statistics/a popular person
          }
```

In this example, source_type describes source information of the track in which the box is located. When source_type is equal to 0, it indicates that region information in the track is recommended by a video producer, or it indicates that region information in the track comes from a content producer or a director, for example, it indicates that region information in the track comes from a viewport recommended by the director. A terminal side may present, to a user by using the information in the track, media content that the director expects to present to the user. When source_type is equal to 1, it indicates that region information in the track is a region that most users are interested in, or it indicates that region information in the track comes from a region that users are most interested in and that is obtained through statistics collection. A terminal side may present, to a user by using the information in the track, the region that most users are interested in and that is in omnidirectional media. When source_type is equal to 2, it indicates that region information in the track is a region for a terminal user to view omnidirectional media, or it indicates that region information in the track comes from a specific person. A terminal side may reproduce a viewport for a user to view the omnidirectional media.

It may be understood that, the foregoing type is only an example used to help understand this embodiment of the present invention, but not a specific limitation. A value of the type may be another value, or may be used to represent another source type.

A procedure of processing the information in the metadata track obtained on the terminal side is as follows:
1. A terminal obtains the metadata track, parses the metadata box (moov box) in the metadata track, and parses the box to obtain a sinf box.
2. The terminal parses the sinf box to obtain source-type information. If source_type is equal to 0, the region information in the track is recommended by the video producer. If source_type is equal to 1, the region information in the track is the region that most users are interested in. If source_type is equal to 2, the region information in the track is the region for the terminal user to view the omnidirectional media. It is assumed that source_type in the metadata obtained by the terminal is equal to 0.
3. The terminal presents a source of the information to a user and accepts a choice of the user.
4. If the user chooses to view in a viewport recommended by the video producer or the director, the terminal parses a sample in the metadata track to obtain the region information, and presents media that corresponds to an obtained region and that is in the omnidirectional media to the user.

The source information of the metadata is carried in the metadata track. The source information indicates that the metadata comes from an omnidirectional video producer, or a user that views an omnidirectional video, or data of a viewport that the users are interested in and that is obtained through statistics collection. Alternatively, a purpose of the metadata described by the information is that the metadata comes from a recommendation of an omnidirectional video producer, or a recommendation of a user that views the omnidirectional video, or a recommendation based on data that is obtained by collecting statistics on a used viewport. When receiving region metadata, a client may distinguish metadata from different sources. If there are a plurality of pieces of region metadata, the user may choose a recommended region to view based on a personal requirement.

In an implementation of the present invention, the source information of the metadata is carried in an MPD.

A source information descriptor is added to a standard element Supplemental Property/Essential Property specified in ISO/IEC 23009-1, where a scheme of the descriptor is ="urn:mpeg:dash:purpose", indicating that the descriptor provides a source of information in a representation in an MPD. A value of the descriptor is described in the following table.

| @value parameter for source descriptor | Use | Description |
|---|---|---|
| source_type | M | source_type describes source information in the representation. When source_type is equal to 0, it indicates that region information in a track is recommended by a video producer, or it indicates that region information in a track comes from a content producer or a director, for example, it indicates that the region information in the track comes from a viewport recommended by the director. A terminal side may present, to a user by using the information in the track, media content that the director expects to present to the user. When source_type is equal to 1, it indicates that region information in a track is a region that most users are interested in, or it indicates that region information in a track comes from a region that users are most interested in and that is obtained through statistics collection. A terminal side may present, to a user by using the information in the track, a region that most users are interested in and that is in omnidirectional media. When source_type is equal to 2, it indicates that region information in a track is a region for a terminal user to view omnidirectional media, or it indicates that region information in a track comes from a specific person. A terminal side may reproduce a viewport for a user to view the omnidirectional media. |

The foregoing descriptor may be in an adaptationSet element of the MPD or a representation element of the MPD. In the following specific example, the descriptor is in the representation element.

```
                 <?xml version="1.0" encoding="UTF-8"?>
          <MPD
            xmlns="urn:mpeg:dash:schema:mpd:2011"
            type="static"
             mediaPresentationDuration="PT10S"
             minBufferTime="PT1S"
             profiles="urn:mpeg:dash:profile:isoff-on-demand:2011">
             <Period>
               <!-Metadata track-->
               <AdaptationSet segmentAlignment="true"
 subsegmentAlignment="true" subsegmentStartsWithSAP="1">
                 <Representationid="metadata" ... bandwidth="100">
                          <EssentialProperty schemeIdUri=" urn:mpeg:dash:purpose "
                          value="0"/>
                       <BaseURL> metadata.mp4</BaseURL>
                   <SegmentBase indexRangeExact="true" indexRange="837-988"/>
                 </Representation>
               </AdaptationSet> ...
             </Period>
          </MPD>
```

In this example, source information in the representation is described by using the descriptor. Alternatively, one attribute may be added to the adaptationSet element or the representation element to describe a source of the representation. For example, the attribute is sourceType. When sourceType is equal to 0, it indicates that region information in a track is recommended by a video producer, or it indicates that region information in a track comes from a content producer or a director, for example, it indicates that the region information in the track comes from a viewport recommended by the director. A terminal side may present, to a user by using the information in the track, media content that the director expects to present to the user. When sourceType is equal to 1, it indicates that region information in a track is a region that most users are interested in, or it indicates that region information in a track comes from a region that users are most interested in and that is obtained through statistics collection. A terminal side may present, to a user by using the information in the track, a region that most users are interested in and that is in omnidirectional media. When sourceType is equal to 2, it indicates that region information in a track is a region for a terminal user to view omnidirectional media, or it indicates that region information in a track comes from a specific person. A terminal side may reproduce a viewport for a user to view the omnidirectional media.

An example of the MPD is as follows:

```
                 <?xml version="1.0" encoding="UTF-8"?>
          <MPD
            xmlns="urn:mpeg:dash:schema:mpd:2011"
            type="static"
             mediaPresentationDuration="PT10S"
             minBufferTime="PT1S"
             profiles="urn:mpeg:dash:profile:isoff-on-demand:2011">
             <Period>
               <!-Metadata track-->
               <AdaptationSet segmentAlignment="true"
 subsegmentAlignment="true" subsegmentStartsWithSAP="1">
                 <Representationid="metadata" ... bandwidth="100" soureceType="0">
                       <BaseURL> metadata.mp4</BaseURL>
                   <SegmentBase indexRangeExact="true" indexRange="837-988"/>
                 </Representation>
               </AdaptationSet> ...
             </Period>
          </MPD>
```

In the foregoing two examples of the MPD, the descriptor and the attribute are respectively used to indicate that region information in a metadata.mp4 file described by the representation is recommended by the video producer.

A procedure of processing the information in the examples obtained on the terminal side is as follows:
1. A terminal obtains and parses an MPD file, and if an adaptationSet element or a representation element obtained after parsing includes a descriptor whose scheme is urn:mpeg:dash:purpose, parses a value of the descriptor.
2. If the value is equal to 0, region information in the representation is recommended by the video producer. If the value is equal to 1, region information in the representation is the region that most users are interested in. If the value is equal to 2, region information in the representation is the region for the terminal user to view the omnidirectional media. It is assumed that the value in an MPD obtained by the terminal is equal to 0.
3. The terminal presents a source of the information to a user and accepts a choice of the user.
4. If the user chooses to view in a viewport recommended by the video producer or the director, the terminal constructs a request for a segment in the representation based on the information in the MPD to obtain the segment, parses region information of the segment to obtain the region information, and presents media that corresponds to an obtained region and that is in the omnidirectional media to the user.

In an embodiment of the present invention, the source information of the metadata is carried in SEI.

For example:

| sei_payload( payloadType, payloadSize ) { | Descriptor |
|---|---|
| if( payloadType = = SRC ) | |
| source_payload(payloadSize) | |
| } | |

SRC in the foregoing syntax represents a specific value, for example, 190. This is not limited herein. When a payload type of the SEI is SRC, syntax of the SEI is described in the following table.

| source_payload(payloadSize) { | Descriptor |
|---|---|
| source_type | |
| } | |

source_type in this payload describes source information of region information described by the SEI. When source_type is equal to 0, it indicates that the region information described by the SEI is recommended by a video producer, or it indicates that the region information described by the SEI comes from a content producer or a director, for example, it indicates that the region information described by the SEI comes from a viewport recommended by the director. A terminal side may present, to a user by using the region information described by the SEI, media content that the director expects to present to the user. When source_type is equal to 1, it indicates that the region information described by the SEI is a region that most users are interested in, or it indicates that the region information described by the SEI comes from a region that users are most interested in and that is obtained through statistics collection. A terminal side may present, to a user by using the region information described by the SEI, a region that most users are interested in and that is in omnidirectional media. When source type is equal to 2, it indicates that the region information described by the SEI is a region for a terminal user to view omnidirectional media, or it indicates that the region information described by the SEI comes from a specific person. A terminal side may reproduce a viewport for a user to view the omnidirectional media.

A procedure of processing the video bitstream obtained on the terminal side is as follows:
1. A terminal obtains the video bitstream, parses NALU header information in the bitstream, and if header information type obtained after parsing is a SEI type, parses a SEI NALU to obtain a payload type of the SEI.
2. If the payload type obtained after parsing is 190, it indicates that source information of region metadata is carried in the SEI. The terminal continues parsing to obtain Source-type information. If source_type is equal to 0, region information in this track is recommended by a video producer. If source_type is equal to 1, region information in this track is a region that most users are interested in. If source_type is equal to 2, region information in this track is a region for a terminal user to view omnidirectional media. It is assumed that source_type, obtained by the terminal, in the SEI is equal to 0.
3. The terminal presents a source of the information to a user and accepts a choice of the user.
4. If the user chooses to view in a viewport recommended by the video producer or a director, the terminal parses region information in the video bitstream to obtain the region information, and presents media that corresponds to an obtained region and that is in the omnidirectional media to the user.

In an embodiment of the present invention, in addition to the types of the source information that are listed in the foregoing embodiments, semantics of the source information may further be extended.

For example:

### 1. Syntax extension in a metadata track:

```
          SourceInformationBox extends Box('sinf') {
          ...
          unsigned int(5)[3] language; // ISO-639-2/T language code
          string sourceDescription;
          }
```

### Semantics:

language: indicates a language of a subsequent character string. This value uses language codewords in ISO-639-2/T to represent various languages.
sourceDescription: is a character string and specifies content of a source of region metadata. sourceDescription specifies a description of the source. For example, this value may be "a director's cut", indicating that the metadata comes from an author or is recommended by an author. Alternatively, sourceDescription specifies a name of a recommender. For example, this value may be "Tom", indicating that the metadata comes from Tom or is recommended by Tom.

### 2. Extension in an MPD:

| @value parameter for source descriptor | Use | Description |
|---|---|---|
| language | O | Indicates a language of a subsequent character string. This value uses language codewords in ISO-639-2/T to represent various languages. |
| sourceDescription | O | Is a character string and specifies content of a source of region metadata. sourceDescription specifies a description of the source or a description of a purpose. For example, this value may be "a director's cut", indicating that the metadata comes from an author or is recommended by an author. Alternatively, sourceDescription specifies a name of a recommender. For example, this value may be "Tom", indicating that the metadata comes from Tom or is recommended by Tom. |

### 3. Extension in SEI: (semantics of syntax is the same as the foregoing semantics)

| source_payload(payloadSize) { | Descriptor |
|---|---|
| Language | |
| sourceDescription | |
| } | |

In an embodiment of the present invention, in addition to the types of the source information that are listed in the foregoing embodiments, semantics of the source information may further be extended.

### For example:

### 1. Syntax extension in a metadata track:

```
          SourceInformationBox extends Box('sinf) {
          ...
          Int(64) data;
          }
```

### Semantics:

Data: specifies a time, for example, Mon, 04 Jul 2011 05:50:30 GMT at which the metadata track is generated/recommended.

### 2. Extension in an MPD:

| @value parameter for source descriptor | Use | Description |
|---|---|---|
| Date | O | Specifies a time, for example, Mon, 04 Jul 2011 05:50:30 GMT at which the metadata track is generated/recommended. |

### 3. Extension in SEI: (semantics of syntax is the same as the foregoing semantics)

| source_payload(payloadSize) { | Descriptor |
|---|---|
| Date | |
| } | |

In an embodiment of the present invention, in addition to the types of the source information that are listed in the foregoing embodiments, semantics of the source information may further be extended.

### For example:

### 1. Syntax extension in a metadata track:

```
          SourceInformationBox extends Box('sinf) {
          ...
          string reason_description;
          }
```

### Semantics:

reason_description: specifies a reason for recommending metadata or description information of video content corresponding to recommended metadata.

### 2. Extension in an MPD:

| @value parameter for source descriptor | Use | Description |
|---|---|---|
| reason_description | O | Specifies a reason for recommending metadata or description information of video content corresponding to recommended metadata. |

### 3. Extension in SEI: (semantics of syntax is the same as the foregoing semantics)

| source_payload(payloadSize) { | Descriptor |
|---|---|
| reason_description | |
| } | |

In an embodiment of the present invention, in addition to the types of the source information that are listed in the foregoing embodiments, semantics of the source information may further be extended.

For example:

### 1. Syntax extension in a metadata track:

```
          SourceInformationBox extends Box('sinf) {
          ...
          string person_description;
          }
```

### Semantics:

person_description: specifies user age information of recommendation metadata or an age range such as the child, the youth, or the elderly, or 0-10 or 10-20 that is obtained through statistics collection.

### 2. Extension in an MPD:

| @value parameter for source descriptor | Use | Description |
|---|---|---|
| person_description | O | Specifies user age information of recommendation metadata or an age range such as the child, the youth, or the elderly, or 0-10 or 10-20 that is obtained through statistics collection. |

### 3. Extension in SEI: (semantics of syntax is the same as the foregoing semantics)

| source_payload(payloadSize) { | Descriptor |
|---|---|
| person_description | |
| } | |

In an embodiment of the present invention, SourceInformationBox may be included in a scheme information box.

### Syntax:

```
          aligned(8) class SourceInformationBox extends FullBox('sinf, 0, 0) {
          unsigned int(8) source_type;
          unsigned int(64) date;
          unsigned int(32) ID_lenght;
          string sourceDescription
          unsigned int(32) reason_lenght;
          string reason_description
          }
```

### Semantics:

source_type has an integer value, and indicates a source type of metadata. Different values indicate the following source types:
0: The metadata comes from a content producer or a director.
1: The metadata comes from a region that users are most interested in and that is obtained through statistics collection.
2: The metadata comes from a specific person.

Another value is reserved.
date specifies a time at which the metadata is generated/recommended.

ID_lenght indicates a length of ID_description, and this value is obtained by subtracting 1 from the length of ID_description.

ID_description specifies a name of a recommender.

reason_lenght indicates a length of reason_description, and this value is obtained by subtracting 1 from the length of reason_description.

reason_description specifies a reason for recommending the metadata or description information of video content corresponding to the recommended metadata.

It may be understood that, the SourceInformationBox may alternatively use another name, for example, natrueInformationBox.

In a possible implementation, an example of the natrueInformationBox is as follows:

```
          Box Type: 'ninf'
          Container: Scheme Information box ('schi')
          Mandatory:No
          Quantity: Zero or one
          Syntax of the natrueInformationBox is:
          aligned(8) class natrueInformationBox extends FullBox('ninf, 0, 0) {
          unsigned int(8) natrue_type;
          unsigned int(64) date;
          unsigned int(32) ID_lenght;
          string ID_description
          unsigned int(32) reason_lenght;
          string reason_description
          }
```

Herein, natrue_type has an integer value, and indicates a source type of metadata. Different values indicate the following source types:
1: The metadata comes from a content producer or a director.
2: The metadata comes from a region that users are most interested in and that is obtained through statistics collection.
3: The metadata comes from a specific person.

Another value is reserved.
date specifies a time at which the metadata is generated/recommended, and date may be an integer time calculated in seconds, or expressed in another time form.

ID_lenght indicates a length of ID_description, and this value is obtained by subtracting 1 from the length of ID_description.

ID_description specifies a name of a recommender.

reason_lenght indicates a length of reason_description, and this value is obtained by subtracting 1 from the length of reason_description.

reason_description specifies a reason for recommending the metadata, or description information of video content corresponding to the recommended metadata.

In a specific example:
natrue_type an integer that indicates the type of nature. The following values for natrue_type are specified:
1: The recommended viewport timed metadata track is used for indicating a director's cut.
2: The recommended viewport timed metadata track is used for indicating the statistically most-viewed viewport.
3: The recommended viewport timed metadata track is used for indicating a particular person or user.

Other values of natrue_type are reserved.
date is an integer that declares the recommended time of the metadate (in seconds since midnight, Jan. 1, 1904, in UTC time).

ID_lenght indicates the length in byte of the ID_description field minus one.

ID_description specifies the name of the recommended person. It is a null-terminated string in UTF-8 characters containing a file group name.

reason_lenght indicates the length in byte of the reason_description field minus one.

reason_description specifies the recommended reason or the description of the media content corresponding to the metadata. It is a null-terminated string in UTF-8 characters containing a file group name.

Syntax in all the foregoing embodiments of the present invention may be carried in a media (media) track. For example, the SourceInformationBox or the natrueInformationBox may be carried in a tref box of the media track. The ISO/IEC 14496-12 standard specifies that tref is a track reference box, and the box specifies a track associated with a current media track. The SourceInformationBox or the natrueInformationBox may be extension of the tref box. aligned(8) class SourceInformationBox extends tref ('sinf', 0, 0).

In an embodiment of the present invention, information about a purpose/a source of the metadata may alternatively be represented by a sample entry type. For example, a sample entry type of a region that most users are interested in may be 'mroi', a recommendation of a user may be 'proi', and a recommendation of an author or a director may be 'droi'.

In an embodiment of the present invention, a terminal side presents, to a user, description information of a metadata track that may be recommended to the user, and the user choose a recommendation to view based on the description information. A terminal obtains, based on the choice of the user, a metadata track corresponding to the choice, parses the obtained metadata track to obtain region information in the track, and presents omnidirectional media based on the region information. Alternatively, a terminal feeds back information about the recommendation chosen by the user to a content server side. A content service side obtains a metadata track based on the fed-back choice of the user, parses metadata track information to obtain region information, and sends, to the terminal based on the region information, media data corresponding to the region information. On the terminal side, the region information in the metadata track may further be used to create, for the user, a movable viewing environment. Rotation simulation is performed on the viewing environment based on a yaw angle, a pitch angle, and a rotation angle that are in the region information. For example, the viewing environment may be a rotable chair, and the chair may move to the left or the right, tilt forward or backward, or rotate based on the region information.

FIG. 10 is a schematic diagram of a hardware structure of a computer device 100 according to an embodiment of the present invention. As shown in FIG. 10, the computer device 100 may be used as an implementation of a streaming media information processing apparatus or an implementation of a streaming media information processing method. The computer device 100 includes a processor 101, a memory 102, an input/output interface 103, and a bus 105, and may further include a communications interface 104. The processor 101, the memory 102, the input/output interface 103, and the communications interface 104 are communicatively connected to each other by using the bus 105.

The processor 101 may use a general-purpose central processing unit (Central Processing Unit, CPU), a microprocessor, an application-specific integrated circuit (Application Specific Integrated Circuit, ASIC), or one or more integrated circuits. The processor 101 is configured to execute a related program, so as to implement a function that needs to be performed by a module in the streaming media information processing apparatus provided in the embodiments of the present invention, or perform the streaming media information processing method corresponding to the method embodiments of the present invention. The processor 101 may be an integrated circuit chip and has a signal processing capability. In an implementation process, steps in the foregoing method can be implemented by using a hardware integrated logic circuit in the processor 101, or by using instructions in a form of software. The processor 101 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 101 may implement or perform the method, the steps, and logical block diagrams that are disclosed in the embodiments of the present invention. The general-purpose processor may be a microprocessor, or the processor may be any conventional processor or the like. The steps of the method disclosed with reference to the embodiments of the present invention may be directly executed and completed by using a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 102. The processor 101 reads information in the memory 102, and performs, with hardware of the processor 101, the function that needs to be performed by the module included in the streaming media information processing apparatus provided in the embodiments of the present invention, or performs the streaming media information processing method provided in the method embodiments of the present invention.

The memory 102 may be a read-only memory (Read Only Memory, ROM), a static storage device, a dynamic storage device, or a random access memory (Random Access Memory, RAM). The memory 102 may store an operating system and another application program. When the function that needs to be performed by the module included in the streaming media information processing apparatus provided in the embodiments of the present invention is implemented by using software or firmware, or the streaming media information processing method provided in the method embodiments of the present invention is performed, program code used to implement the technical solutions provided in the embodiments of the present invention is stored in the memory 102, and the processor 101 performs an operation that needs to be performed by the module included in the streaming media information processing apparatus, or performs the media data processing method provided in the method embodiments of present invention.

The input/output interface 103 is configured to receive input data and information, and output data such as an operation result.

The communications interface 104 uses a transceiving apparatus, for example, but not limited to, a transceiver, to implement communication between the computing device 100 and another device or a communications network. The communications interface 104 may be used as an obtaining module or a sending module in a processing apparatus.

The bus 105 may include a channel for transferring information between components (such as the processor 101, the memory 102, the input/output interface 103, and the communications interface 104) of the computer device 100.

It should be noted that, although only the processor 101, the memory 102, the input/output interface 103, the communications interface 104, and the bus 105 of the computer device 100 in FIG. 10 are shown, in a specific implementation process, a person skilled in the art should understand that the computer device 100 further includes another component necessary for normal operation. For example, the computer device 100 may further include a display configured to display to-be-played video data. In addition, a person skilled in the art should understand that the computer device 100 may further include, based on a specific requirement, a hardware component for implementing another additional function. Furthermore, a person skilled in the art should understand that the computer device 100 may include only components necessary for implementing the embodiments of the present invention, but not necessarily include all the components shown in FIG. 10.

It should be noted that, for ease of description, the foregoing method embodiments are described as a series of actions. However, a person skilled in the art should understand that the present invention is not limited to the described sequence of the actions, because some steps may be performed in another sequence or performed at the same time according to the present invention. In addition, the person skilled in the art should also appreciate that all the embodiments described in the specification are preferred embodiments, and the related actions and modules are not necessarily mandatory to the present invention. A person of ordinary skill in the art may understand that all or some of the processes of the methods in the embodiments may be implemented by a computer program instructing relevant hardware. The program may be stored in a computer readable storage medium. When the program is run, the processes of the methods in the embodiments are performed. The foregoing storage medium may be a magnetic disk, an optical disc, a read-only memory (ROM: Read-Only Memory), or a random access memory (RAM: Random Access Memory).

Although the present invention is described with reference to the embodiments, in a process of implementing the present invention that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect. A computer program may be stored/distributed in an appropriate medium such as an optical storage medium or a solid-state medium, and be provided together with other hardware or be used as a part of hardware, or may be distributed in another manner, for example, by using the internet, or another wired or wireless telecommunications system.

## Claims

1. A media information processing method, wherein the method comprises:
obtaining metadata information of media data, wherein the metadata information comprises source information of metadata, the source information is used to indicate a recommender of the media data, and the media data is omnidirectional media data; and
processing the media data based on the source information of the metadata.

2. The method according to claim 1, wherein the obtaining metadata information of media data comprises:
obtaining a metadata track (track) of the media data, wherein the metadata track comprises the source information of the metadata.

3. The method according to claim 1, wherein the obtaining metadata information of media data comprises:
obtaining a media presentation description file of the media data, wherein the media presentation description file comprises the source information of the metadata.

4. The method according to claim 1, wherein the obtaining metadata information of media data comprises:
obtaining a bitstream that comprises the media data, wherein the bitstream further comprises supplemental enhancement information (supplementary enhancement information, SEI), and the supplemental enhancement information comprises the source information of the metadata.

5. The method according to any one of claims 1 to 4, wherein the source information of the metadata is a source type identifier.

6. The method according to any one of claims 1 to 4, wherein the source information of the metadata comprises a semantic representation of the recommender of the media data.

7. A media information processing apparatus, wherein the apparatus comprises:
an information obtaining module, configured to obtain metadata information of media data, wherein the metadata information comprises source information of metadata, the source information is used to indicate a recommender of the media data, and the media data is omnidirectional media data; and
a processing module, configured to process the media data based on the source information of the metadata.

8. The apparatus according to claim 7, wherein the information obtaining module is specifically configured to obtain a metadata track (track) of the media data, wherein the metadata track comprises the source information of the metadata.

9. The apparatus according to claim 7, wherein the information obtaining module is specifically configured to obtain a media presentation description file of the media data, wherein the media presentation description file comprises the source information of the metadata.

10. The apparatus according to claim 7, wherein the information obtaining module is specifically configured to obtain a bitstream that comprises the media data, wherein the bitstream further comprises supplemental enhancement information (supplementary enhancement information, SEI), and the supplemental enhancement information comprises the source information of the metadata.

11. The apparatus according to any one of claims 7 to 10, wherein the source information of the metadata is a source type identifier.

12. The apparatus according to any one of claims 7 to 10, wherein the source information of the metadata comprises a semantic representation of the recommender of the media data.

13. A media information processing method, wherein the method comprises:
receiving pieces of user viewport information sent by a plurality of clients, wherein the user viewport information is used to indicate a viewport for a user to view omnidirectional media data;
determining a target viewport based on all the pieces of user viewport information; and
sending media data corresponding to the target viewport.

14. A media information processing method, wherein the method comprises:
receiving pieces of user viewport information sent by a plurality of clients, wherein the user viewport information is used to indicate a viewport for a user to view omnidirectional media data;
determining a target viewport based on all the pieces of user viewport information; and
generating metadata information of media data based on the target viewport.

15. A media information processing apparatus, wherein the apparatus comprises:
a receiver, configured to receive pieces of user viewport information sent by a plurality of clients, wherein the user viewport information is used to indicate a viewport for a user to view omnidirectional media data;
a processor, configured to determine a target viewport based on all the pieces of user viewport information; and
a transmitter, configured to send media data corresponding to the target viewport.

16. A media information processing apparatus, wherein the apparatus comprises:
a receiver, configured to receive pieces of user viewport information sent by a plurality of clients, wherein the user viewport information is used to indicate a viewport for a user to view omnidirectional media data; and
a processor, configured to determine a target viewport based on all the pieces of user viewport information and generate metadata information of media data based on the target viewport.
